# EUROPÄISCHE PATENTSCHRIFT

(11) **EP 2 944 641 B1**
(45) Veröffentlichungstag und Bekanntmachung des Hinweises auf die Patenterteilung: **04.01.2017**
(21) Anmeldenummer: 15161573.9
(22) Anmeldetag: 30.03.2015
(51) Int. Cl.: C07F 7/18

(54) **Verfahren zur Herstellung von harnstoffhaltigen Mercaptosilanen**
Process for preparing urea-containing mercaptosilanes
Procédé de fabrication de mercaptosilanes contenant de l'urée

(30) Priorität: 15.05.2014 DE 102014209221
(43) Veröffentlichungstag der Anmeldung: 18.11.2015
(73) Patentinhaber: Evonik Degussa GmbH, 45128 Essen (DE)
(72) Erfinder: Moser, Ralph, 79104 Freiburg i. Br. (DE); Röben, Caren, 50670 Köln (DE); Mayer, Stefanie, 79618 Rheinfelden (DE)

(56) Entgegenhaltungen:
- EP-A1- 1 700 861
- EP-A1- 2 570 419
- DE-A1- 3 424 534
- DE-B3- 10 351 735
- GUDIMA, N. V. ET AL: "Sorption of gold and palladium on silica gel modified by N-(4-mercaptophenyl)-N'-propylurea groups", UKRAINSKII KHIMICHESKII ZHURNAL (RUSSIAN EDITION), Bd. 76, 2010, Seiten 114-118, XP008177583, ISSN: 0041-6045

## Beschreibung

Die Erfindung betrifft ein Verfahren zur Herstellung von harnstoffhaltigen Mercaptosilanen.

Aus CAS 1082204-82-7, 1268617-33-9 und 104261-54-3 sind Verbindungen der Formel 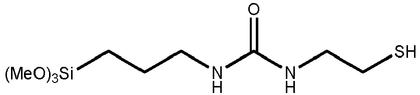 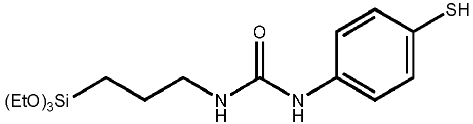 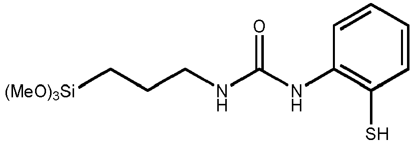 bekannt.

Ferner sind aus JP 2008279736 A harnstoffhaltige Silane für Beschichtungen bekannt.

Aus DE 3424534 A1 sind N,N'- und N,N',N'-substituierte harnstoffhaltige Silane der Formel 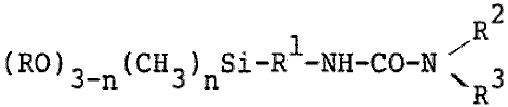 bekannt. Die Herstellung erfolgt durch Umsetzung einer Aminoverbindung, einem Halogensilan und Alkalicyanat in einem aprotisch, polaren organischem Lösungsmittel, beispielsweise DMF oder DMSO.

Ferner sind aus JP 2002311574 Pulverbeschichtungen bekannt enthaltend Silane der Formel R¹-S-R²-NH-C(O)-NH-R³-Si(R⁴)ₘ(OR⁵)₃₋ₘ.

Aus WO 9955754 A1 sind photosensitive Harzzusammensetzungen bekannt enthaltend Alkoxysilane der Formel

[(R¹O)₃₋ₐ(R²)ₐSi-R³-A-C(O)-B]ₘ-X.

Nachteil des bekannten Herstellverfahrens ist die Verwendung von gesundheitsgefährdenden organischen Lösungsmitteln, beispielsweise DMF oder DMSO, und Ausgangsverbindungen, beispielsweise KOCN oder NaOCN. Ein weiterer Nachteil ist die aufwendige Aufarbeitung.

Aufgabe der vorliegenden Erfindung ist es, ein Verfahren zur Verfügung zu stellen, welches gegenüber den Verfahren aus dem Stand der Technik ohne gesundheitsgefährdenden organischen Lösungsmitteln und Ausgangsverbindungen auskommt und eine einfache Aufarbeitung hat.

Gegenstand der Erfindung ist ein Verfahren zur Herstellung von harnstoffhaltigen Mercaptosilanen der allgemeinen Formel I 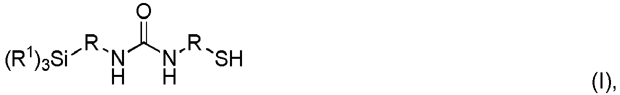 wobei R¹ gleich oder verschieden sind und C1-C10-Alkoxygruppen, vorzugsweise Methoxy- oder Ethoxygruppe, C2-C10- cyklische Dialkoxy-Gruppe, Phenoxygruppe, C4-C10-Cycloalkoxygruppen, C6-C20-Arylgruppen, vorzugsweise Phenyl, C1-C10-Alkylgruppe, vorzugsweise Methyl oder Ethyl, C2-C20-Alkenylgruppe, C7-C20-Aralkylgruppe oder Halogen, vorzugsweise Cl, und R gleich oder verschieden sind und eine verzweigte oder unverzweigte, gesättigte oder ungesättigte, aliphatische, aromatische oder gemischt aliphatische/aromatische zweibindige C₁-C₃₀-, bevorzugt C₁-C₂₀ -, besonders bevorzugt C₁-C₁₀ -, ganz besonders bevorzugt C₁-C₇ -, insbesondere bevorzugt C2 und C3-Kohlenwasserstoffgruppe, die gegebenenfalls mit F-, Cl-, Br-, I-, -CN oder HS- substituiert ist, sind, welches dadurch gekennzeichnet ist,
dass man ein Halogensilan der allgemeinen Formel II 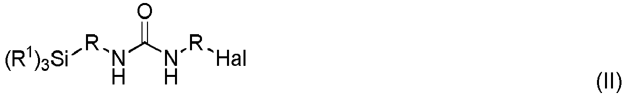 mit NaSH, wobei R und R¹ die oben genannte Bedeutung haben, und Hal gleich F, Cl, Br oder I, vorzugsweise Cl, ist, in C2-C8-Alkohol, vorzugsweise Ethanol, umsetzt und das Halogensilan der allgemeinen Formel II vor der Umsetzung mit NaSH aus dem Hydrochlorid-Salz eines Amins der allgemeinen Formel III 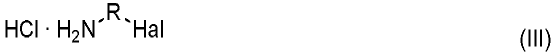 und Isocyantsilan der allgemeinen Formel IV 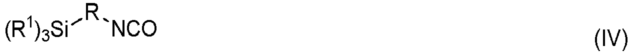 durch Zugabe einer Base oder aus der Isocyanathalogenverbindung der allgemeinenFormel V 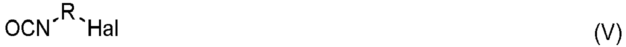 und Aminosilan der allgemeinen Formel VI 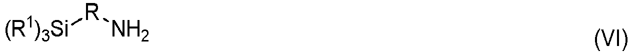 hergestellt wird.

Harnstoffhaltige Mercaptosilane können Mischungen von harnstoffhaltigen Mercaptosilanen der allgemeinen Formel I sein.

Das Verfahrensprodukt kann Oligomere, die durch Hydrolyse und Kondensation der Alkoxysilanfunktionen der harnstoffhaltigen Mercaptosilanen der allgemeinen Formel I entstehen, enthalten. R kann bevorzugt -CH₂-, -CH₂CH₂-, -CH₂CH₂CH₂-, -CH₂CH₂CH₂CH₂-, -CH(CH₃)-, -CH₂CH(CH₃)-,-CH(CH₃)CH₂-, -C(CH₃)₂-, -CH(C₂H₅)-, -CH₂CH₂CH(CH₃)-, -CH(CH₃)CH₂CH₂-, -CH₂CH(CH₃)CH₂-, -CH₂CH₂CH₂CH₂CH₂-, -CH₂CH₂CH₂CH₂CH₂CH₂-, -CH₂CH₂CH₂CH₂CH₂CH₂CH₂-, -CH₂CH₂CH₂CH₂CH₂CH₂CH₂CH₂-, -CH₂CH₂CH₂CH₂CH₂CH₂CH₂CH₂CH₂-, -CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂CH₂CH₂CH₂CH₂CH₂CH₂-oder 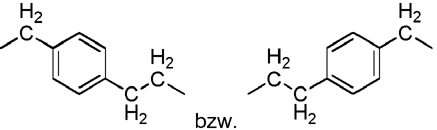 bedeuten.

Harnstoffhaltige Mercaptosilane der allgemeinen Formel I können bevorzugt sein:
(EtO)₃Si-CH₂-NH-CO-NH-CH₂-SH_{,}
(EtO)₃Si-CH₂CH₂-NH-CO-NH-CH₂-SH_{,}
(EtO)₃Si-CH₂-NH-CO-NH-CH₂CH₂-SH_{,}
(EtO)₃Si-CH₂CH₂-NH-CO-NH-CH₂CH₂-SH_{,}
(EtO)₃Si-CH₂CH₂CH₂-NH-CO-NH-CH₂-SH_{,}
(EtO)₃Si-CH₂CH₂CH₂-NH-CO-NH-CH₂CH₂-SH_{,}
(EtO)₃Si-CH₂-NH-CO-NH-CH₂CH₂CH₂-SH_{,}
(EtO)₃Si-CH₂CH₂-NH-CO-NH-CH₂CH₂CH₂-SH_{,}
(EtO)₃Si-CH₂CH₂CH₂-NH-CO-NH-CH₂CH₂CH₂-SH_{,}
(MeO)₃Si-CH₂-NH-CO-NH-CH₂-SH_{,}
(MeO)₃Si-CH₂CH₂-NH-CO-NH-CH₂-SH_{,}
(MeO)₃Si-CH₂-NH-CO-NH-CH₂CH₂-SH_{,}
(MeO)₃Si-CH₂CH₂-NH-CO-NH-CH₂CH₂-SH_{,}
(MeO)₃Si-CH₂CH₂CH₂-NH-CO-NH-CH₂-SH_{,}
(MeO)₃Si-CH₂CH₂CH₂-NH-CO-NH-CH₂CH₂-SH_{,}
(MeO)₃Si-CH₂-NH-CO-NH-CH₂CH₂CH₂-SH_{,}
(MeO)₃Si-CH₂CH₂-NH-CO-NH-CH₂CH₂CH₂-SH oder
(MeO)₃Si-CH₂CH₂CH₂-NH-CO-NH-CH₂CH₂CH₂-SH_{.}

Insbesondere bevorzugt ist die Verbindung der Formel
(EtO)₃Si-CH₂CH₂CH₂-NH-CO-NH-CH₂CH₂-SH_{.}

Halogensilane der allgemeinen Formel II können bevorzugt sein:
(EtO)₃Si-CH₂-NH-CO-NH-CH₂-Cl,
(EtO)₃Si-CH₂CH₂-NH-CO-NH-CH₂-Cl_{,}
(EtO)₃Si-CH₂-NH-CO-NH-CH₂CH₂-Cl_{,}
(EtO)₃Si-CH₂CH₂-NH-CO-NH-CH₂CH₂-Cl_{,}
(EtO)₃Si-CH₂CH₂CH₂-NH-CO-NH-CH₂-Cl_{,}
(EtO)₃Si-CH₂CH₂CH₂-NH-CO-NH-CH₂CH₂-Cl
(EtO)₃Si-CH₂-NH-CO-NH-CH₂CH₂CH₂-Cl_{,}
(EtO)₃Si-CH₂CH₂-NH-CO-NH-CH₂CH₂CH₂-Cl_{,}
(EtO)₃Si-CH₂CH₂CH₂-NH-CO-NH-CH₂CH₂CH₂-Cl_{,}
(MeO)₃Si-CH₂-NH-CO-NH-CH₂-Cl,
(MeO)₃Si-CH₂CH₂-NH-CO-NH-CH₂-Cl_{,}
(MeO)₃Si-CH₂-NH-CO-NH-CH₂CH₂-Cl_{,}
(MeO)₃Si-CH₂CH₂-NH-CO-NH-CH₂CH₂-Cl_{,}
(MeO)₃Si-CH₂CH₂CH₂-NH-CO-NH-CH₂-Cl,
(MeO)₃Si-CH₂CH₂CH₂-NH-CO-NH-CH₂CH₂-Cl_{,}
(MeO)₃Si-CH₂-NH-CO-NH-CH₂CH₂CH₂-Cl_{,}
(MeO)₃Si-CH₂CH₂-NH-CO-NH-CH₂CH₂CH₂-Cl_{,}
(MeO)₃Si-CH₂CH₂CH₂-NH-CO-NH-CH₂CH₂CH₂-Cl.
(EtO)₃Si-CH₂-NH-CO-NH-CH₂-Br,
(EtO)₃Si-CH₂CH₂-NH-CO-NH-CH₂-Br_{,}
(EtO)₃Si-CH₂-NH-CO-NH-CH₂CH₂-Br_{,}
(EtO)₃Si-CH₂CH₂-NH-CO-NH-CH₂CH₂-Br_{,}
(EtO)₃Si-CH₂CH₂CH₂-NH-CO-NH-CH₂-Br_{,}
(EtO)₃Si-CH₂CH₂CH₂-NH-CO-NH-CH₂CH₂-Br
(EtO)₃Si-CH₂-NH-CO-NH-CH₂CH₂CH₂-Br_{,}
(EtO)₃Si-CH₂CH₂-NH-CO-NH-CH₂CH₂CH₂-Br_{,}
(EtO)₃Si-CH₂CH₂CH₂-NH-CO-NH-CH₂CH₂CH₂-Br_{,}
(MeO)₃Si-CH₂-NH-CO-NH-CH₂-Br,
(MeO)₃Si-CH₂CH₂-NH-CO-NH-CH₂-Br_{,}
(MeO)₃Si-CH₂-NH-CO-NH-CH₂CH₂-Br_{,}
(MeO)₃Si-CH₂CH₂-NH-CO-NH-CH₂CH₂-Br_{,}
(MeO)₃Si-CH₂CH₂CH₂-NH-CO-NH-CH₂-Br,
(MeO)₃Si-CH₂CH₂CH₂-NH-CO-NH-CH₂CH₂-Br_{,}
(MeO)₃Si-CH₂-NH-CO-NH-CH₂CH₂CH₂-Br_{,}
(MeO)₃Si-CH₂CH₂-NH-CO-NH-CH₂CH₂CH₂-Broder
(MeO)₃Si-CH₂CH₂CH₂-NH-CO-NH-CH₂CH₂CH₂-Br_{.}

Das durch das erfindungsgemäße Verfahren erhältliche harnstoffhaltige Mercaptosilan der allgemeinen Formel I kann in einer Ausbeute von größer als 50%, bevorzugt größer als 60%, besonders bevorzugt größer als 70%, ganz besonders bevorzugt größer als 80%, erhalten werden.

Der lösliche Anteil in dem durch das erfindungsgemäße Verfahren erhaltenen Produkt in DMSO-d⁶ oder CDCl₃ wird durch Zugabe eines internen Standards, wie beispielsweise Triphenylphosphinoxid (TPPO), in DMSO-d6 oder in CDCl₃ und eine dem Fachmann bekannte ¹H-NMR Methode ermittelt.

Für die Umsetzung können weitere Lösungsmittel, beispielsweise anorganische oder organische Lösungsmittel, eingesetzt werden.

Die Umsetzung kann ohne zusätzliches organisches Lösungsmittel durchgeführt werden.

Im Verhältnis zu den eingesetzten Halogensilanen der allgemeinen Formel II kann die Wassermenge weniger als 10 Gew.-%, bevorzugt weniger als 5 Gew.-%, besonders bevorzugt weniger als 2 Gew.-% und ganz besonders bevorzugt weniger als 1 Gew.-%, betragen.

Die Reaktion kann unter Luftausschluß durchgeführt werden.

Die Reaktion kann unter Schutzgasatmosphäre durchgeführt werden, zum Beispiel unter Argon oder Stickstoff, bevorzugt unter Stickstoff.

Das erfindungsgemäße Verfahren kann bei Normaldruck, erhöhtem Druck oder reduziertem Druck durchgeführt werden. Bevorzugt kann das erfindungsgemäße Verfahren bei Normaldruck durchgeführt werden.

Erhöhter Druck kann ein Druck von 1,1 bar bis 100 bar, bevorzugt von 1,5 bar bis 50 bar, besonders bevorzugt von 2 bar bis 20 bar und ganz besonders bevorzugt von 2 bis 10 bar, sein.

Reduzierter Druck kann ein Druck von 1 mbar bis 1000 mbar, bevorzugt 1 mbar bis 500 mbar, besonders bevorzugt 1 mbar bis 250 mbar, ganz besonders bevorzugt 5 mbar bis 100 mbar, sein.

Das erfindungsgemäße Verfahren kann zwischen 0°C und +150°C, bevorzugt zwischen +20°C und +130°C, besonders bevorzugt zwischen +50°C und +100°C durchgeführt werden.

Bei dem erfindungsgemäßen Verfahren kann Halogensilan der allgemeinen Formel II zu NaSH dosiert werden.

Bei dem erfindungsgemäßen Verfahren kann NaSH zu Halogensilan der allgemeinen Formel II dosiert werden.

Das Halogensilan der allgemeinen Formel II kann vor der Umsetzung mit NaSH aus dem Hydrochlorid-Salz eines Amins der allgemeinen Formel III 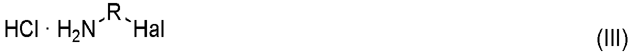 und Isocyanatsilan der allgemeinen Formel IV 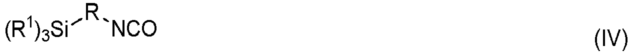 durch Zugabe einer Base, vorzugsweise NaOEt, hergestellt werden, wobei Hal, R und R¹ die oben genannten Bedeutungen haben.

Dabei kann die Base zugegeben werden bis sich ein pH-Wert zwischen 7 und 14 einstellt.

Bei dem erfindungsgemäßen Verfahren können die Hydrochlorid-Salze der Amine der allgemeinen Formel III zu Isocyantsilanen der allgemeinen Formel IV im molekularen Verhältnis von 1:0,80 bis 1:1,20, bevorzugt 1:0,85 bis 1:1,15, besonders bevorzugt im Verhältnis 1:0,90 bis 1:1,10, eingesetzt werden.

Hydrochlorid-Salze der Amine der allgemeinen Formel III können bevorzugt sein:
HCl · H₂N-CH₂-Cl,
HCl · H₂N-CH₂-CH₂-Cl,
HCl · H₂N-CH₂-CH₂-CH₂-Cl,
HCl · H₂N-CH₂-Br,
HCl · H₂N-CH₂-CH₂-Br oder
HCl · H₂N-CH₂-CH₂-CH₂-Br.

Isocyanatsilane der allgemeinen Formel IV können bevorzugt sein:
(EtO)₃Si-CH₂-NCO,
(EtO)₃Si-CH₂-CH₂-NCO,
(EtO)₃Si-CH₂-CH₂-CH₂-NCO,
(MeO)₃Si-CH₂-NCO,
(MeO)₃Si-CH₂-CH₂-NCO oder
(MeO)₃Si-CH₂-CH₂-CH₂-NCO.

Das Halogensilan der allgemeinen Formel II kann vor der Umsetzung mit NaSH aus der Isocyanathalogenverbindung der allgemeinen Formel V 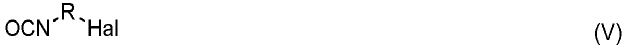 und Aminosilan der allgemeinen Formel VI 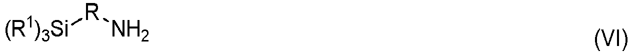 hergestellt werden, wobei Hal, R und R¹ die oben genannten Bedeutungen haben.

Die Umsetzung kann in einem Lösungsmittel, vorzugsweise C2-C8-Alkohol, besonders bevorzugt Ethanol, durchgeführt werden.
Bei dem erfindungsgemäßen Verfahren können die Isocyanathalogenverbindungen der allgemeinen Formel V zu Aminosilanen der allgemeinen Formel VI im molekularen Verhältnis von 1:0,80 bis 1:1,20, bevorzugt 1:0,85 bis 1:1,15, besonders bevorzugt im Verhältnis 1:0,90 bis 1:1,10, eingesetzt werden.

Isocyanathalogenverbindungen der allgemeinen Formel V können bevorzugt sein:
OCN-CH₂-Cl,
OCN-CH₂-CH₂-Cl,
OCN-CH₂-CH₂-CH₂-Cl,
OCN-CH₂-Br,
OCN-CH₂-CH₂-Br oder
OCN-CH₂-CH₂-CH₂-Br.

Aminosilane der allgemeinen Formel VI können bevorzugt sein:
(EtO)₃Si-CH₂-NH₂,
(EtO)₃Si-CH₂-CH₂-NH₂,
(EtO)₃Si-CH₂-CH₂-CH₂-NH₂,
(MeO)₃Si-CH₂-NH₂,
(MeO)₃Si-CH₂-CH₂-NH₂ oder
(MeO)₃Si-CH₂-CH₂-CH₂-NH₂.

Das Produkt, hergestellt mit dem erfindungsgemäßen Verfahren, kann einen Restgehalt an Halogensilan der allgemeinen Formel II von weniger als 25 mol-%, bevorzugt weniger als 10 mol-%, besonders bevorzugt weniger als 5 mol-%, ganz besonders bevorzugt weniger als 3 mol-%, haben.

Die relativen mol-% der Halogensilane der allgemeinen Formel II in dem Produkt, hergestellt mit dem erfindungsgemäßen Verfahren, werden im ¹H-NMR durch Integration der H-Atome der-CH₂CH₂-Cl Gruppe der Halogensilane der allgemeinen Formel II gegen die H-Atome der Si-CH₂-Gruppe der harnstoffhaltigen Mercaptosilane der allgemeinen Formel I bestimmt.
Für die Substanz der Formel II (EtO)₃Si-CH₂CH₂CH₂-NH-CO-NH-CH₂CH₂-Cl wird zum Beispiel das Integral der H-Atome der -CH₂CH₂-Cl Gruppe (δ = 3.17 ppm) für die Bestimmung der relativen Gehalte verwendet.

Das Produkt, hergestellt mit dem erfindungsgemäßen Verfahren, kann einen Restgehalt an Hydrochlorid-Salz eines Amins der allgemeinen Formel III von weniger als 10 mol-%, bevorzugt weniger als 5 mol-%, besonders bevorzugt weniger als 1 mol-%, ganz besonders bevorzugt weniger als 0.1 mol-%, haben.

Die relativen mol-% der Hydrochlorid-Salze eines Amins der allgemeinen Formel III in dem Produkt, hergestellt mit dem erfindungsgemäßen Verfahren, werden im ¹³C-NMR durch Integration der C-Atome der -C-H₂-NH₂·HCl Gruppe der Hydrochlorid-Salze eines Amins der allgemeinen Formel III gegen die C-Atome der Si-CH₂- Gruppe der harnstoffhaltigen Mercaptosilane der allgemeinen Formel I bestimmt.
Für die Substanz der Formel III HCl·H₂N-CH₂-CH₂-Cl wird zum Beispiel das Integral der C-Atome der HCl·H₂N-CH₂-CH₂-Cl Gruppe (δ = 41,25 ppm) oder der HCl·H₂N-CH₂-CH₂-Cl Gruppe (δ = 40,79 ppm) für die Bestimmung der relativen Gehalte verwendet.

Das Produkt, hergestellt mit dem erfindungsgemäßen Verfahren, kann einen Restgehalt an Isocyanatsilane der allgemeinen Formel IV von weniger als 10 mol-%, bevorzugt weniger als 5 mol-%, besonders bevorzugt weniger als 1 mol-%, ganz besonders bevorzugt weniger als 0,1 mol-%, haben.

Die relativen mol-% der Isocyanatsilane der allgemeinen Formel IV in dem Produkt in einem Bereich >1 mol-%, hergestellt mit dem erfindungsgemäßen Verfahren, werden im ¹³C-NMR durch Integration der C-Atome der -NCO Gruppe der Isocyanatsilane der allgemeinen Formel IV gegen die C-Atome der Si-CH₂- Gruppe der harnstoffhaltigen Mercaptosilane der allgemeinen Formel I bestimmt.
Für die Substanz der Formel IV (EtO)₃Si-CH₂-CH₂-CH₂-NCO wird zum Beispiel das Integral der C-Atome der -NCO Gruppe (δ = 122,22 ppm) für die Bestimmung der relativen Gehalte in einem Bereich >1 mol-% verwendet.
Die relativen mol-% der Isocyanatsilane der allgemeinen Formel IV in dem Produkt in einem Bereich <1 mol-%, hergestellt mit dem erfindungsgemäßen Verfahren, werden durch eine dem Fachmann bekannte quantitative FT-IR-Spektroskopie bestimmt. Die Kalibrierung der Methode erfolgt durch Verwendung von Kalibrierlösungen geeigneter Konzentration (z.B. in C₂Cl₄). Für die Messung werden ca. 1 g Probe in eine 25 ml Rollkragenflasche eingewogen und 25 g C₂Cl₄ zugegeben. Die Probe wird auf der Schüttelmaschine 1 - 2 Stunden geschüttelt. Im Anschluss wird die untere flüssige Phase vorsichtig in eine 20 mm IR-Küvette dosiert und per FT-IR-Spektroskopie vermessen (4000-1200 cm⁻¹, Auflösung 2 cm⁻¹). Unter gleichen Bedingungen wird ein Spektrum des Lösungsmittels zur Subtraktion aufgenommen.
Für die Substanz der Formel IV (EtO)₃Si-CH₂-CH₂-CH₂-NCO wird zum Beispiel die Wellenlänge der Valenzschwingung der -NCO Gruppe bei 2270 cm⁻¹ für die Bestimmung der relativen Gehalte in einem Bereich <1 mol-% verwendet.

Das Produkt, hergestellt mit dem erfindungsgemäßen Verfahren, kann einen Restgehalt an Isocyanathalogenverbindungen der allgemeinen Formel V von weniger als 25 mol-%, bevorzugt weniger als 10 mol-%, besonders bevorzugt weniger als 5 mol-%, ganz besonders bevorzugt weniger als 3 mol-%, haben.

Die relativen mol-% der Isocyanathalogenverbindungen der allgemeinen Formel V in dem Produkt, hergestellt mit dem erfindungsgemäßen Verfahren, werden im ¹³C-NMR durch Integration der C-Atome der OCN-CH₂- Gruppe der Isocyanathalogenverbindungen der allgemeinen Formel V gegen die C-Atome der Si-CH₂- Gruppe der harnstoffhaltigen Mercaptosilane der allgemeinen Formel I bestimmt.
Für die Substanz der Formel V OCN-CH₂-CH₂-Cl wird zum Beispiel das Integral der C-Atome der OCN-CH₂- Gruppe (δ = 124,33 ppm) für die Bestimmung der relativen Gehalte verwendet.

Das Produkt, hergestellt mit dem erfindungsgemäßen Verfahren, kann einen Restgehalt an Aminosilane der allgemeinen Formel VI von weniger als 10 mol-%, bevorzugt weniger als 5 mol-%, besonders bevorzugt weniger als 1 mol-%, ganz besonders bevorzugt weniger als 0,1 mol-%, haben.

Die relativen mol-% der Aminosilane der allgemeinen Formel VI in dem Produkt, hergestellt mit dem erfindungsgemäßen Verfahren, werden im ¹³C-NMR durch Integration der C -Atome der-CH₂-NH₂ Gruppe der Aminosilane der allgemeinen Formel VI gegen die C-Atome der Si-CH₂-Gruppe der harnstoffhaltigen Mercaptosilane der allgemeinen Formel I bestimmt.
Für die Substanz der Formel VI (EtO)₃Si-CH₂-CH₂-CH₂-NH₂ wird zum Beispiel das Integral der C-Atome der -CH₂-NH₂ Gruppe (δ = 45,15 ppm) für die Bestimmung der relativen Gehalte verwendet.

Die Reaktionsmischung kann filtriert werden und der Alkohol kann anschließend abdestilliert und das Produkt getrocknet werden. Die Trocknung kann bei 20°C - 100°C erfolgen, gegebenenfalls bei Unterdruck von 1 mbar - 500 mbar.

In einer Ausführungsform kann das Verfahren zur Herstellung von harnstoffhaltigen Mercaptosilanen der allgemeinen Formel I 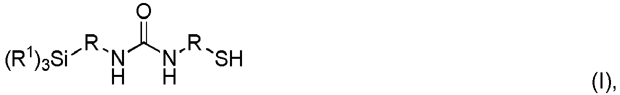 dadurch gekennzeichnet sein, dass man ein Hydrochlorid-Salz eines Amins der allgemeinen Formel III 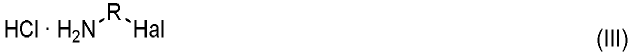 und Isocyanatsilan der allgemeinen Formel IV 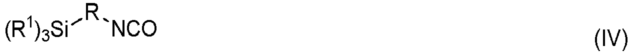 durch Zugabe einer Base in C2-C8-Alkohol, vorzugsweise Ethanol, umsetzt und anschließend das NaSH zugibt, die Reaktionsmischung filtriert, den Alkohol abdestilliert und das Produkt trocknet, wobei Hal, R und R¹ die oben genannte Bedeutung haben.

In einer zweiten Ausführungsform kann das Verfahren zur Herstellung von harnstoffhaltigen Mercaptosilanen der allgemeinen Formel I 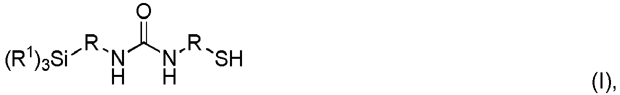 dadurch gekennzeichnet sein, dass man eine Isocyanathalogenverbindung der allgemeinen Formel V 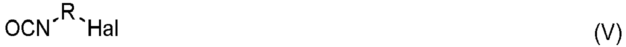 und Aminosilan der allgemeinen Formel VI 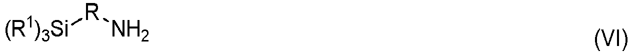 in C2-C8-Alkohol, vorzugsweise Ethanol, umsetzt und anschließend das NaSH zugibt, die Reaktionsmischung filtriert, den Alkohol abdestilliert und das Produkt trocknet, wobei Hal, R und R¹ die oben genannte Bedeutung haben.

Die harnstoffhaltigen Mercaptosilane der allgemeinen Formel I können als Haftvermittler zwischen anorganischen Materialien, zum Beispiel
Glaskugeln, Glasplittern, Glasoberflächen, Glasfasern, oder oxidischen Füllstoffen, bevorzugt Kieselsäuren wie gefällten Kieselsäuren und pyrogenen Kieselsäuren,
und organischen Polymeren, zum Beispiel Duroplasten, Thermoplasten oder Elastomeren, beziehungsweise als Vernetzungsmittel und Oberflächenmodifizierungsmittel für oxidische Oberflächen verwendet werden.

Die harnstoffhaltigen Mercaptosilane der allgemeinen Formel I können als Kopplungsreagenzien in gefüllten Kautschukmischungen, beispielsweise Reifenlaufflächen, technischen Gummiartikeln oder Schuhsolen, verwendet werden.

Vorteil des erfindungsgemäßen Verfahrens ist, dass die Herstellung von harnstoffhaltigen Mercaptosilanen der allgemeinen Formel I ohne gesundheitsgefährdenden organischen Lösungsmitteln und Ausgangsverbindungen möglich ist.

Ein weiterer Vorteil des erfindungsgemäßen Verfahrens ist, dass auf eine aufwendige Aufreinigung der erhaltenen Produkte verzichtet werden kann.

### Beispiel 1: Herstellung von (EtO)₃Si-CH₂CH₂CH₂-NH-CO-NH-CH₂CH₂-SH aus (EtO)₃SiCH₂CH₂CH₂-NH-CO-NH-CH₂CH₂-Cl und NaSH

Zu einer Lösung aus NaSH in Ethanol [hergestellt durch Einleiten von H₂S (15,21 g, 0,45 mol, 1,07 eq) in eine Natriumethanolat-Lösung (hergestellt aus Na (10,55 g, 0,46 mol, 1,10 eq) in EtOH (300 mL))] wird bei 52°C (EtO)₃Si-CH₂CH₂CH₂-NH-CO-NH-CH₂CH₂-Cl (138,90 g, 0,42 mol, 1,00 eq) in Ethanol (300 mL) zudosiert und auf 78°C erwärmt. Nach einer Reaktionszeit von 5 h wird auf Raumtemperatur gekühlt und die Suspension filtriert. Das Filtrat wird am Rotationsverdampfer vom Lösungsmittel befreit und am Vakuum getrocknet. Man erhält das Produkt (EtO)₃Si-CH₂CH₂CH₂-NH-CO-NH-CH₂CH₂-SH (134,96 g, 97,9% d.Th.) als weißen Feststoff.

¹H-NMR (δₚₚₘ, 500 MHz, CDCl₃): 0.64 (2H, t), 1.23 (9H, t), 1.36 (1H, br), 1.61 (2H, m), 2.67 (2H, t), 3.17 (2H, m), 3.37 (2H, m), 3.81 (6H, q), 4.74 (1H, br), 4.94 (1H, br);
¹³C-NMR (δₚₚₘ, 125 MHz, CDCl₃): 7.8 (1C), 18.3 (3C), 23.8 (1C), 25.6 (1C), 43.0 (1C), 43.5 (1C), 58.4 (3C), 158.9 (1C).

### Beispiel 2: Herstellung von (EtO)₃Si-CH₂CH₂CH₂-NH-CO-NH-CH₂CH₂-SH aus (EtO)₃Si-CH₂CH₂CH₂-NH₂, OCN-CH₂CH₂-Cl und NaSH

3-Aminopropyltriethoxysilan (154,95 g, 0,70 mol, 1,00 eq) wird in Ethanol (3,0 L) in einem 4 L Dreihalskolben mit KPG-Rührer, Innenthermometer, Tropftrichter und Rückflusskühler vorgelegt und auf-78°C gekühlt. 2-Chlorethylisocyanat (73,86 g, 0,70 mol, 1,00 eq) wird innerhalb von 2,5 h bei -78 bis -69°C zugetropft und danach auf 50°C erwärmt. Eine Lösung von NaSH [analoge Herstellung wie in Beispiel 1 aus 21 %iger NaOEt-Lösung in EtOH (244,98 g, 0,76 mol, 1,09 eq) und H₂S (25,06 g, 0,74 mol, 1,05 eq)] wird innerhalb von 50 min zugegeben und die Mischung auf 78°C erhitzt. Nach einer Reaktionszeit von 5 h wird auf Raumtemperatur gekühlt und die Suspension filtriert. Das Filtrat wird am Rotationsverdampfer vom Lösungsmittel befreit und am Vakuum getrocknet. Man erhält das Produkt (EtO)₃Si-CH₂CH₂CH₂-NH-CO-NH-CH₂CH₂-SH (208,07 g, 90,8% d.Th.) als weißen Feststoff.

¹H-NMR (δₚₚₘ, 500 MHz, CDCl₃): 0.64 (2H, t), 1.22 (9H, t), 1.36 (1H, br), 1.61 (2H, m), 2.67 (2H, t), 3.16 (2H, m), 3.37 (2H, m), 3.81 (6H, q), 4.65 (1 H, br), 4.84 (1 H, br).

### Beispiel 3: Herstellung von (EtO)₃Si-CH₂CH₂CH₂-NH-CO-NH-CH₂CH₂-SH aus (EtO)₃Si-CH₂CH₂CH₂-NCO, HCl · H₂N-CH₂CH₂-Cl und NaSH

2-Chlorethylamin Hydrochlorid (73,86 g, 0,70 mol, 1,00 eq) wird in Ethanol (3,0 L) in einem 4 L Dreihalskolben mit KPG-Rührer, Innenthermometer, Tropftrichter und Rückflusskühler vorgelegt und auf -78°C gekühlt und Natriumethanolat (226,83 g, 0,70 mol, 1,00 eq, 21% in Ethanol) zugegeben. 3-Isocyanatopropyl(triethoxysilan) (173,15 g, 0,70 mol, 1,00 eq) wird nun innerhalb von 3 h bei -78 bis -70°C zugetropft und danach auf 50°C erwärmt. Eine Lösung von NaSH [analoge Herstellung wie in Beispiel 1 aus 21 %iger NaOEt-Lösung in EtOH (244,98 g, 0,76 mol, 1,09 eq) und H₂S (25,06 g, 0,74 mol, 1,05 eq)] wird innerhalb von 50 min zugegeben und die Mischung auf 78°C erhitzt. Nach einer Reaktionszeit von 5 h wird auf Raumtemperatur gekühlt und die Suspension filtriert. Das Filtrat wird am Rotationsverdampfer vom Lösungsmittel befreit und am Vakuum getrocknet. Man erhält das Produkt (EtO)₃Si-CH₂CH₂CH₂-NH-CO-NH-CH₂CH₂-SH (220,34 g, 96,9% d.Th.) als leicht gelbliches Öl.

## Patentansprüche

1. Verfahren zur Herstellung von harnstoffhaltigen Mercaptosilanen der allgemeinen Formel I 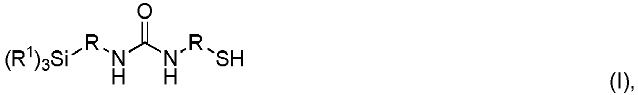
wobei R¹ gleich oder verschieden sind und C1-C10-Alkoxygruppen, C2-C10- cyklische Dialkoxy-Gruppe, Phenoxygruppe, C4-C10-Cycloalkoxygruppen, C6-C20-Arylgruppen, C1-C10-Alkylgruppe, C2-C20-Alkenylgruppe, C7-C20-Aralkylgruppe oder Halogen, und R gleich oder verschieden sind und eine verzweigte oder unverzweigte, gesättigte oder ungesättigte, aliphatische, aromatische oder gemischt aliphatische /aromatische zweibindige C₁-C₃₀-, Kohlenwasserstoffgruppe sind, **dadurch gekennzeichnet,**
**dass** man ein Halogensilan der allgemeinen Formel II 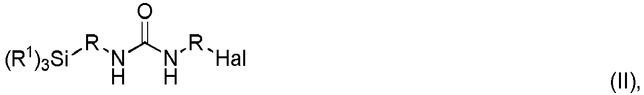
wobei Hal F, Cl, Br oder I ist,
mit NaSH in C2-C8-Alkohol umsetzt und das Halogensilan der allgemeinen Formel II vor der Umsetzung mit NaSH aus dem Hydrochlorid-Salz eines Amins der allgemeinen Formel III 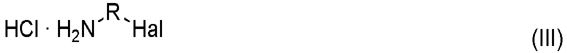 und Isocyantsilan der allgemeinen Formel IV 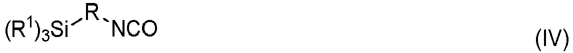 durch Zugabe einer Base oder aus der Isocyanathalogenverbindung der allgemeinen Formel V 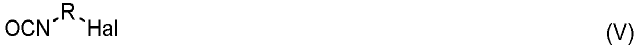 und Aminosilan der allgemeinen Formel VI 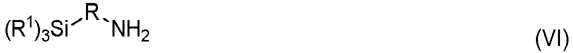 hergestellt wird.

2. Verfahren zur Herstellung von harnstoffhaltigen Mercaptosilanen der allgemeinen Formel I gemäß Anspruch 1, **dadurch gekennzeichnet, dass** man als Alkohol Ethanol einsetzt.

3. Verfahren zur Herstellung von harnstoffhaltigen Mercaptosilanen der allgemeinen Formel I gemäß Anspruch 1, **dadurch gekennzeichnet, dass** die harnstoffhaltigen Mercaptosilane der allgemeinen Formel I (EtO)₃Si-CH₂-NH-CO-NH-CH₂-SH, (EtO)₃Si-CH₂CH₂-NH-CO-NH-CH₂-SH_{,} (EtO)₃Si-CH₂-NH-CO-NH-CH₂CH₂-SH_{,} (EtO)₃Si-CH₂CH₂-NH-CO-NH-CH₂CH₂-SH_{,} (EtO)₃Si-CH₂CH₂CH₂-NH-CO-NH-CH₂-SH_{,} (EtO)₃Si-CH₂CH₂CH₂-NH-CO-NH-CH₂CH₂-SH_{,} (EtO)₃Si-CH₂-NH-CO-NH-CH₂CH₂CH₂-SH_{,} (EtO)₃Si-CH₂CH₂-NH-CO-NH-CH₂CH₂CH₂-SH_{,} (EtO)₃Si-CH₂CH₂CH₂-NH-CO-NH-CH₂CH₂CH₂-SH_{,} (MeO)₃Si-CH₂-NH-CO-NH-CH₂-SH, (MeO)₃Si-CH₂CH₂-NH-CO-NH-CH₂-SH_{,} (MeO)₃Si-CH₂-NH-CO-NH-CH₂CH₂-SH_{,} (MeO)₃Si-CH₂CH₂-NH-CO-NH-CH₂CH₂-SH_{,} (MeO)₃Si-CH₂CH₂CH₂-NH-CO-NH-CH₂-SH_{,} (MeO)₃Si-CH₂CH₂CH₂-NH-CO-NH-CH₂CH₂-SH_{,} (MeO)₃Si-CH₂-NH-CO-NH-CH₂CH₂CH₂-SH_{,} (MeO)₃Si-CH₂CH₂-NH-CO-NH-CH₂CH₂CH₂-SH oder (MeO)₃Si-CH₂CH₂CH₂-NH-CO-NH-CH₂CH₂CH₂-SH_{.} sind.

4. Verfahren zur Herstellung von harnstoffhaltigen Mercaptosilanen der allgemeinen Formel I gemäß Anspruch 1, **dadurch gekennzeichnet, dass** die Umsetzung ohne zusätzliches organisches Lösungsmittel durchgeführt wird.

5. Verfahren zur Herstellung von harnstoffhaltigen Mercaptosilanen der allgemeinen Formel I gemäß Anspruch 1, **dadurch gekennzeichnet, dass** die Temperatur zwischen 0°C und +150°C beträgt.

6. Verfahren zur Herstellung von harnstoffhaltigen Mercaptosilanen der allgemeinen Formel I gemäß Anspruch 1, **dadurch gekennzeichnet, dass** man als Base NaOEt einsetzt.

7. Verfahren zur Herstellung von harnstoffhaltigen Mercaptosilanen der allgemeinen Formel I gemäß Anspruch 1, **dadurch gekennzeichnet, dass** man die Base bis sich ein pH-Wert zwischen 7 und 14 einstellt zugibt.

8. Verfahren zur Herstellung von harnstoffhaltigen Mercaptosilanen der allgemeinen Formel I gemäß Anspruch 1, **dadurch gekennzeichnet, dass** man die Reaktionsmischung filtriert und den Alkohol abdestilliert.

9. Verfahren zur Herstellung von harnstoffhaltigen Mercaptosilanen der allgemeinen Formel I gemäß Anspruch 8, **dadurch gekennzeichnet, dass** man das Produkt trocknet.

## Claims

1. Process for preparing urea-containing mercaptosilanes of the general formula I 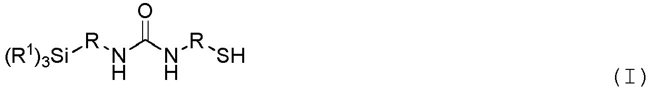
where R¹ are the same or different and are C1-C10 alkoxy groups, C2-C10 cyclic dialkoxy groups, phenoxy group, C4-C10 cycloalkoxy groups, C6-C20 aryl groups, C1-C10 alkyl group, C2-C20 alkenyl group, C7-C20 aralkyl group or halogen, and R are the same or different and are a branched or unbranched, saturated or unsaturated, aliphatic, aromatic or mixed aliphatic/aromatic divalent C₁-C₃₀ hydrocarbon group, **characterized in that**
a halosilane of the general formula II 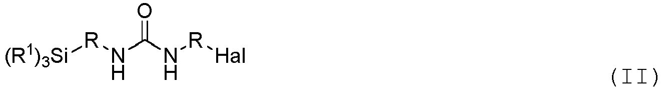
where Hal is F, Cl, Br or I
is reacted with NaSH in C2-C8 alcohol and the halosilane of the general formula II, prior to reaction with NaSH, is prepared from the hydrochloride salt of an amine of the general formula III 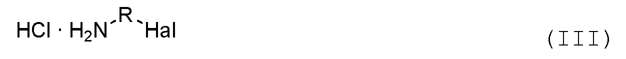 and isocyanatosilane of the general formula IV 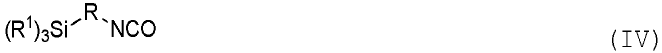 by addition of a base, or from the isocyanatehalogen compound of the general formula V 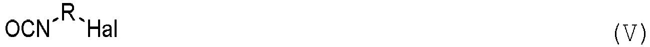 and aminosilane of the general formula VI

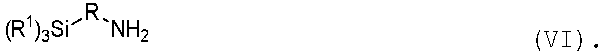

2. Process for preparing urea-containing mercaptosilanes of the general formula I according to Claim 1, **characterized in that** the alcohol used is ethanol.

3. Process for preparing urea-containing mercaptosilanes of the general formula I according to Claim 1, **characterized in that** the ureacontaining mercaptosilanes of the general formula I are (EtO)₃Si-CH₂-NH-CO-NH-CH₂-SH, (EtO)₃Si-CH₂CH₂-NH-CO-NH-CH₂-SH, (EtO)3Si-CH2-NH-CO-NH-CH2CH2-SH, (EtO)3Si-CH2CH2-NH-CO-NH-CH2CH2-SH, (EtO)3Si-CH2CH2CH2-NH-CO-NH-CH2-SH, (EtO)3Si-CH2CH2CH2-NH-CO-NH-CH2CH2-SH, (EtO)3Si-CH2-NH-CO-NH-CH2CH2CH2-SH, (EtO)3Si-CH2CH2-NH-CO-NH-CH2CH2CH2-SH, (EtO)3Si-CH2CH2CH2-NH-CO-NH-CH2CH2CH2-SH, (MeO)3Si-CH2-NH-CO-NH-CH2-SH, (MeO)3Si-CH2CH2-NH-CO-NH-CH2-SH, (MeO)3Si-CH2-NH-CO-NH-CH2CH2-SH, (MeO)3Si-CH2CH2-NH-CO-NH-CH2CH2-SH, (MeO)3Si-CH2CH2CH2-NH-CO-NH-CH2-SH, (MeO)3Si-CH2CH2CH2-NH-CO-NH-CH2CH2-SH, (MeO)3Si-CH2-NH-CO-NH-CH2CH2CH2-SH, (MeO)3Si-CH2CH2-NH-CO-NH-CH2CH2CH2-SH or (MeO)₃Si-CH₂CH₂CH₂-NH-CO-NH-CH₂CH₂CH₂-SH.

4. Process for preparing urea-containing mercaptosilanes of the general formula I according to Claim 1, **characterized in that** the reaction is conducted without additional organic solvent.

5. Process for preparing urea-containing mercaptosilanes of the general formula I according to Claim 1, **characterized in that** the temperature is between 0°C and +150°C.

6. Process for preparing urea-containing mercaptosilanes of the general formula I according to Claim 1, **characterized in that** the base used is NaOEt.

7. Process for preparing urea-containing mercaptosilanes of the general formula I according to Claim 1, **characterized in that** the base is added until a pH between 7 and 14 is established.

8. Process for preparing urea-containing mercaptosilanes of the general formula I according to Claim 1, **characterized in that** the reaction mixture is filtered and the alcohol is distilled off.

9. Process for preparing urea-containing mercaptosilanes of the general formula I according to Claim 8, **characterized in that** the product is dried.

## Revendications

1. Procédé pour la préparation de mercaptosilanes contenant de l'urée de formule générale I 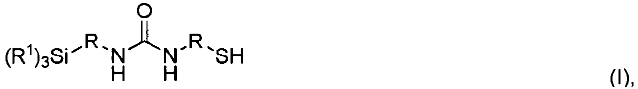 dans laquelle les radicaux R¹ sont identiques ou différents et représentent des groupes C₁-C₁₀-alcoxy, des groupes C₂-C₁₀-dialcoxy cycliques, le groupe phénoxy, des groupes C₄-C₁₀-cycloalcoxy, des groupes C₆-C₂₀-aryle, des groupes C₁-C₁₀-alkyle, des groupes C₂-C₂₀-alcényle, des groupes C₇-C₂₀-aralkyle ou halogène et les radicaux R sont identiques ou différents et représentent un groupe hydrocarboné en C₁-C₃₀ divalent, ramifié ou non ramifié, saturé ou insaturé, aliphatique, aromatique ou aliphatique/aromatique mixte, **caractérisé en ce qu'**on transforme un halogénosilane de formule générale II 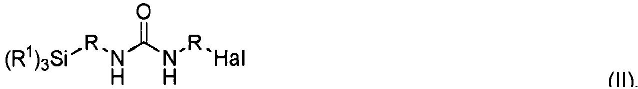 dans laquelle Hal représente F, Cl, Br ou I, avec du NaSH dans un alcool en C₂-C₈ et l'halogénosilane de formule générale II étant préparé avant la transformation avec du NaSH à partir du sel de chlorhydrate d'une amine de formule générale III 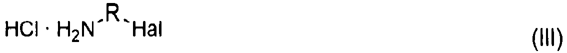 et de l'isocyanatosilane de formule générale IV 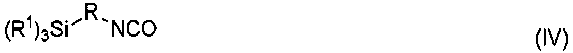 par addition d'une base ou à partir du composé isocyanato-halogéné de formule générale V 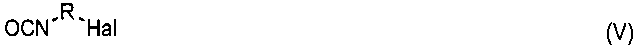 et de l'aminosilane de formule générale VI

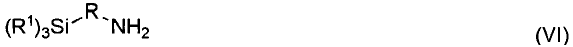

2. Procédé pour la préparation de mercaptosilanes contenant de l'urée de formule générale I selon la revendication 1, **caractérisé en ce qu'**on utilise, comme alcool, de l'éthanol.

3. Procédé pour la préparation de mercaptosilanes contenant de l'urée de formule générale I selon la revendication 1, **caractérisé en ce que** les mercaptosilanes contenant de l'urée de formule générale I sont (EtO)₃Si-CH₂-NH-CO-NH-CH₂-SH, (EtO)₃Si-CH₂CH₂-NH-CO-NH-CH₂-SH, (EtO)₃Si-CH₂-NH-CO-NH-CH₂CH₂-SH, (EtO)₃Si-CH₂CH₂-NH-CO-NH-CH₂CH₂-SH, (EtO)₃Si-CH₂CH₂CH₂-NH-CO-NH-CH₂-SH, (EtO)₃Si-CH₂CH₂CH₂-NH-CO-NH-CH₂CH₂-SH, (EtO)₃Si-CH₂-NH-CO-NH-CH₂CH₂CH₂-SH, (EtO)₃Si-CH₂CH₂-NH-CO-NH-CH₂CH₂CH₂-SH, (EtO)₃Si-CH₂CH₂CH₂-NH-CO-NH-CH₂CH₂CH₂-SH, (MeO)₃Si-CH₂-NH-CO-NH-CH₂-SH, (MeO)₃Si-CH₂CH₂-NH-CO-NH-CH₂-SH, (MeO)₃Si-CH₂-NH-CO-NH-CH₂CH₂-SH, (MeO)₃Si-CH₂CH₂-NH-CO-NH-CH₂CH₂-SH, (MeO)₃Si-CH₂CH₂CH₂-NH-CO-NH-CH₂-SH, (MeO)₃Si-CH₂CH₂CH₂-NH-CO-NH-CH₂CH₂-SH, (MeO)₃Si-CH₂-NH-CO-NH-CH₂CH₂CH₂-SH, (MeO)₃Si-CH₂CH₂-NH-CO-NH-CH₂CH₂CH₂-SH ou (MeO)₃Si-CH₂CH₂CH₂-NH-CO-NH-CH₂CH₂CH₂-SH.

4. Procédé pour la préparation de mercaptosilanes contenant de l'urée de formule générale I selon la revendication 1, **caractérisé en ce que** la transformation est réalisée sans solvant organique supplémentaire.

5. Procédé pour la préparation de mercaptosilanes contenant de l'urée de formule générale I selon la revendication 1, **caractérisé en ce que** la température est située entre 0°C et +150°C.

6. Procédé pour la préparation de mercaptosilanes contenant de l'urée de formule générale I selon la revendication 1, **caractérisé en ce qu'**on utilise, comme base, du NaOEt.

7. Procédé pour la préparation de mercaptosilanes contenant de l'urée de formule générale I selon la revendication 1, **caractérisé en ce qu'**on ajoute la base jusqu'à ce qu'il se règle un pH entre 7 et 14.

8. Procédé pour la préparation de mercaptosilanes contenant de l'urée de formule générale I selon la revendication 1, **caractérisé en ce qu'**on filtre le mélange réactionnel et on élimine l'alcool par distillation.

9. Procédé pour la préparation de mercaptosilanes contenant de l'urée de formule générale I selon la revendication 8, **caractérisé en ce qu'**on sèche le produit.
